# EUROPÄISCHE PATENTSCHRIFT

(11) **EP 2 059 424 B1**
(45) Veröffentlichungstag und Bekanntmachung des Hinweises auf die Patenterteilung: **02.01.2013**
(21) Anmeldenummer: 07803006.1
(22) Anmeldetag: 29.08.2007
(51) Int. Cl.: B60T 8/40

(54) **BREMSSYSTEM FÜR KRAFTFAHRZEUGE**
BRAKING SYSTEM FOR MOTOR VEHICLES
SYSTÈME DE FREINAGE POUR VÉHICULES À MOTEUR

(30) Priorität: 29.08.2006 DE 102006040424
(43) Veröffentlichungstag der Anmeldung: 20.05.2009
(73) Patentinhaber: Continental Teves AG & Co. OHG, 60488 Frankfurt (DE)
(72) Erfinder: DRUMM, Stefan, 55291 Saulheim (DE)
(86) Internationale Anmeldenummer: PCT/EP2007/058989
(87) Internationale Veröffentlichungsnummer: WO 2008/025797

(56) Entgegenhaltungen:
- EP-A2- 1 078 833
- WO-A-2006/042822
- DE-A1- 10 321 721
- DE-A1- 19 732 229
- DE-A1-102004 025 638
- US-A1- 2005 225 168

## Beschreibung

Die Erfindung betrifft ein Bremssystem für Kraftfahrzeuge gemäß dem Oberbegriff von Anspruch 1.

In der Kraftfahrzeugtechnik finden "brake-by-wire"-Bremssysteme eine immer größere Verbreitung. Bei diesen Bremssystemen kann die Bremse einerseits ohne aktives Zutun des Fahrzeugführers aufgrund elektronischer Signale "fremd-" betätigt werden. Diese elektronischen Signale können beispielsweise von einem elektronischen Stabilitätsprogramm ESP oder einem Abstandsregelsystem ACC ausgegeben werden. Andererseits kann auf eine Betätigung des Bremssystems ganz oder teilweise verzichtet werden, wenn eine vom Fahrzeugführer über eine Bremspedalbetätigung angeforderte Bremswirkung beispielsweise durch Umschalten eines elektrischen Fahrzeugantriebs in einen Generatorbetrieb erzielt wird. In beiden Fällen entspricht der Betätigungszustand der Bremse nicht der vom Fahrzeugführer vorgegebenen Bremspedalbetätigung. Bei herkömmlichen Bremssystemen führt dies zu einer Rückwirkung auf das Bremspedal. Die Bremspedalcharakteristik - d.h. die Abhängigkeit des Bremspedalwegs von der Bremspedalkraft ist durch die beschriebene Rückwirkung gestört. Dieser Rückwirkungseffekt auf das Bremspedal kann für den Fahrer überraschend und unangenehm sein, so dass der Fahrer in einer kritischen Situation des Straßenverkehrs das Bremspedal nicht in einem dieser Situation angepassten Maße betätigt, da er durch die für ihn nicht vorhersehbare Rückwirkung auf das Bremspedal irritiert wird.

Aus der DE 10 321 721 A1 ist ein Bremssystem bekannt, das u. a. bei Fahrzeugen mit einem Hybridantrieb verwendet werden, bei denen so genannte Rekuperationsbremsvorgänge durchgeführt werden. Das Bremssystem umfasst einen Hauptzylinder, an den Radbremskreise angeschlossen sind, einen ersten Kolben, der über eine Betätigungskräfte übertragende Druckstange mit einem Bremspedal gekoppelt ist, einen zweiten Kolben, über den der Hauptzylinder betätigt wird, einen dritten Kolben, der vom ersten Kolben betätigbar ist, und der in eine kraftübertragende Verbindung mit dem zweiten Kolben bringbar ist, eine Simulationseinrichtung mit mindestens einem elastischen Element, die dem Fahrzeugführer ein angenehmes Pedalgefühl vermittelt, einen mit hydraulischem Druck beaufschlagbaren Zwischenraum zwischen dem zweiten und dem dritten Kolben, wobei eine Druckbeaufschlagung des Zwischenraums den zweiten und den dritten Kolben in entgegen gesetzter Richtung belastet, eine vom dritten Kolben begrenzte, hydraulische, mittels eines Sperrventils absperrbare Kammer, mit der bei Bedarf eine Bewegung des dritten Kolbens in Betätigungsrichtung verhindert wird, und eine Druckbereitstellungseinrichtung, die den Druck im Zwischenraum steuert. Das der Regelung des im erwähnten Zwischenraum eingesteuerten Druckes dienende Druckregelventil wird bei dem vorbekannten Bremssystem mittels mechanischer Kraftübertragungsmittel angesteuert, die wirkungsmäßig zwischen dem ersten Kolben und dem Ventilkörper des Druckregelventils angeordnet sind. Als Mittel zur elektrischen Regelung des im Zwischenraum eingesteuerten Druckes sind elektromagnetisch ansteuerbare Ventileinrichtungen vorgesehen, die als analog regelbare, stromlos geschlossene (SG-) 2/2-Wegeventile ausgebildet sind. Als nachteilig wird bei dem vorbekannten Bremssystem die Tatsache empfunden, dass die zu dessen Betrieb notwendige Stellenergie in einem Hochdruckspeicher bereit gehalten werden muss, dessen Druckmittel während einer Bremsbetätigung in die Radbremskreise strömt. Einerseits ist es energetisch ineffizient, das Druckmittel zunächst auf das hohe Druckniveau des Hochdruckspeichers zu bringen, obwohl bei der Mehrzahl der Bremsungen nur ein Bruchteil dieses Speicherdruckniveaus benötigt wird und andererseits besteht hierbei die Gefahr dass bei einer möglichen Kontamination des Druckmittels durch Gasblasen das Bremssystem dadurch ausfallen kann, dass die Gasblasen durch ihre mit dem Ausströmen aus dem Hochruckspeicher verbundene Volumenausdehnung eine zur hydraulischen Kraftübertragung notwendige Flüssigkeitssäule aus den Bremsleitungen verdrängen.

In der DE 10 2004 025 638 A1 wird eine gattungsgemäße Bremsanlage beschrieben, die einen Hauptbremszylinder aufweist, einen ersten Kolben, der mit einem Bremspedal gekoppelt ist, einen zweiten Kolben, der den Hauptzylinder betätigt und einen dritten Kolben, der vom ersten Kolben betätigbar ist, wobei mindestens ein elastisches Element vorgesehen ist, über das Betätigungskräfte vom Bremspedal auf den dritten Kolben übertragen werden und das einen Pedalwegsimulator bildet, wobei alle drei Kolben innerhalb eines Gehäuses angeordnet sind. Weiterhin ist ein hydraulisches Druckbereitstellungsmodul mit einem elektromechanischen Aktuator, dem eine hydraulische Zylinder-Kolben-Anordnung nachgeschaltet ist, vorgesehen, das einen Druck erzeugt, der über eine hydraulische Verbindung in einen Zwischenraum zwischen dem zweiten Kolben und dem dritten Kolben eingespeist wird.

Es ist Aufgabe der vorliegenden Erfindung, ein Bremssystem der eingangs genannten Gattung vorzuschlagen, bei welchem in einer "Brake-by-wire"-Betriebsart sowie bei Rekuperationsbremsungen die Bremspedalcharakteristik nicht vom Betätigungszustand der restlichen Bremsanlage abhängt, wodurch das Pedalgefühl bei einer Fahrerbremsung weder durch das gleichzeitige Vorliegen einer Fremdbremsung noch durch andere Regelungsaktivitäten des Bremssystems wie Antiblockierregelung, Traktionskontrolle oder Fahrstabilitätsregelung gestört werden kann.

Diese Aufgabe wird erfindungsgemäß durch eine Bremsanlage gemäß Anspruch 1 gelöst.

Zur Konkretisierung des Erfindungsgedankens ist vorgesehen, dass die Druckbereitstellungseinrichtung durch eine Zylinder-Kolben-Anordnung gebildet wird, deren Kolben durch einen elektromechanischen Aktuator betätigbar ist.

Bei einer vorteilhaften Weiterbildung des Erfindungsgegenstandes ist ein elektrischer Energiespeicher vorgesehen, der den elektromechanischen Aktuator mit Energie versorgt, solange dieser nicht direkt aus einem elektrischen Fahrzeugbordnetz gespeist wird.

Eine andere vorteilhafte Weiterbildung der Erfindung besteht darin, dass die Simulationseinrichtung einem ersten Bremskraftverstärkerdruckmittelkreis und die Druckbereitstellungseinrichtung, einem zweiten Bremskraftverstärkerdruckmittelkreis zugeordnet sind, wobei während des Betriebs des Bremssystems zwischen erstem und zweitem Bremskraftverstärkerdruckmittelkreis und den Radbremskreisen kein Druckmittelaustausch stattfindet. Durch diese Maßnahmen wird die Betriebssicherheit des erfindungsgemäßen Bremssystems erheblich erhöht, da von einer möglichen Leckage in einem der hydraulischen Kreise die anderen nicht betroffen sind.

Bei einer anderen Ausgestaltung des Erfindungsgegenstandes ist die Druckbereitstellungseinrichtung unter Zwischenschaltung eines elektrisch schaltbaren 2/2-Wegeventils an den Druckmittelvorratsbehälter angeschlossen. Selbstverständlich ist es auch möglich, das oben erwähnte Bereithalten des Druckmittelvorrats auf Atmosphärendruckniveau - wie in der Bremsentechnik üblich - durch ein Schnüffelloch, ein Kippventil oder ein Zentralventil zu erreichen. Das elektrisch schaltbare 2/2-Wegeventil bietet jedoch den Vorteil, dass der Aktuator der Druckbereitstellungseinrichtung im Bedarfsfall sofort mit dem Druckaufbau beginnen kann und nicht erst nach dem Zurücklegen eines Ventilschaltweges.

Weitere vorteilhafte Ausführangen des erfindungsgemäßen Bremssystems sind in den Unteransprüchen aufgeführt.

Die vorliegende Erfindung wird nachfolgend an einem Ausführungsbeispiel unter Bezugnahme auf die beiliegende schematische Zeichnung näher erläutert, wobei die gleichen Komponenten mit den gleichen Bezugszeichen versehen sind. In der Zeichnung zeigen:
Fig. 1 den Aufbau eines Bremssystems; und
Fig. 2 den Aufbau einer Ausführung des erfindungsgemäßen Bremssystems.

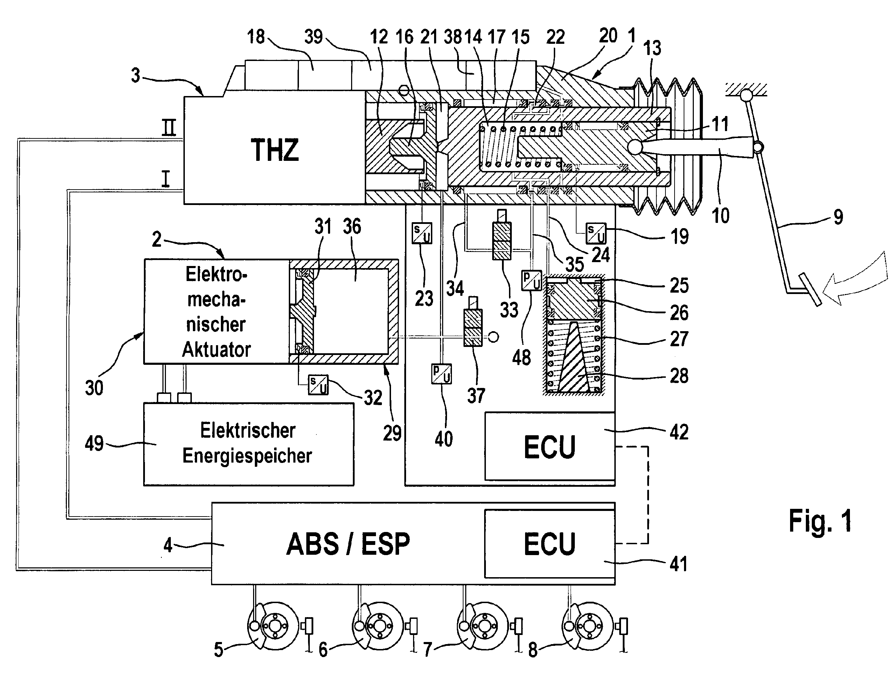

Das in der Zeichnung dargestellte erfindungsgemäße Bremssystem besteht im Wesentlichen aus einer Betätigungseinrichtung 1, einer Druckbereitstellungseinrichtung 2, wobei die Betätigungseinheit und die Druckbereitstellungseinrichtung einen Bremskraftverstärker bilden, sowie einem dem Bremskraftverstärker wirkungsmäßig nachgeschalteten Hauptbremszylinder bzw. Tandemhauptzylinder 3, dessen nicht dargestellte Druckräume mit den unter Atmosphärendruck stehenden Kammern eines ersten Druckmittelvorratsbehälters 18 verbindbar sind. Andererseits sind an die Druckräume Radbremskreise I, II angeschlossen, die unter Zwischenschaltung eines bekannten ABS- oder ESP-Hydroaggregats bzw. eines steuerbaren Radbremsdruckmodulationsmoduls die Radbremsen 5 - 8 eines Kraftfahrzeuges mit hydraulischem Druckmittel versorgen. Dem Radbremsdruckmodulationsmodul 4 ist eine elektronische Steuer- und Regeleinheit 41 zugeordnet. Die Betätigungseinrichtung 1, die in einem Gehäuse 20 angeordnet ist, an das der Tandemhauptzylinder 3 angeschlossen ist, ist über ein Bremspedal 9 ansteuerbar, das über eine Betätigungsstange 10 mit einem ersten Kolben 11 der Betätigungseinrichtung 1 wirkungsmäßig verbunden ist. Der Betätigungsweg des Bremspedals 9 wird mittels eines Wegsensors 19 erfasst, der den Weg des ersten Kolbens 11 sensiert. Zum gleichen Zweck kann jedoch auch ein Drehwinkelsensor verwendet werden, der den Drehwinkel des Bremspedals 9 erfasst. Der erste Kolben 11 ist in einem dritten Kolben 13 angeordnet, in dem er eine Druckkammer 14 begrenzt, die eine Druckfeder 15 aufnimmt, die bei unbetätigtem Bremspedal 9 den ersten Kolben 11 zur Anlage am dritten Kolben 13 bringt. Alternativ oder zusätzlich kann im Bereich der Druckstange 10 oder des Bremspedals 9 eine Pedalrückstellfeder vorgesehen sein. Die Druckkammer 14 ist in unbetätigtem Zustand der Betätigungseinrichtung 1 mit einer Kammer 38 eines zweiten Druckmittelvorratsbehälters 38, 39 verbunden, der der Betätigungseinrichtung 1 zugeordnet ist. Der dritte Kolben 13 wirkt mit einem zweiten Kolben 12 zusammen, der den Primärkolben des Tandemhauptzylinders 3 bilden kann, wobei im dargestellten Beispiel zwischen dem zweiten (12) und dem dritten Kolben 13 ein Druckübersetzungskolben 16 angeordnet ist. Zwischen dem dritten Kolben 13 und dem Druckübersetzungskolben 16 ist ein Zwischenraum 21 begrenzt, durch dessen Beaufschlagen mit einem hydraulischen Druck der dritte Kolben 13 an einem im Gehäuse 20 ausgebildeten Anschlag 22 gehalten wird, während der Druckübersetzungskolben 16 und damit der Primärkolben 12 des Tandemhauptzylinders im Sinne eines Druckaufbaus im Tandemhauptzylinder 3 beaufschlagt werden. Eine aus dieser Belastung resultierende Bewegung des Druckübersetzungskolbens 16 wird mittels eines zweiten Wegsensors 23 erfasst. Bei dem in Fig. 1 dargestellten Bremssystem begrenzt der dritte Kolben 13 im Gehäuse 20 eine hydraulische Kammer 17, deren Funktion im nachfolgenden Text erläutert wird. An die hydraulische Kammer 17 ist eine erste Leitung 34 angeschlossen, die über ein stromlos offenes (SO-) Sperrventil 33 mit einer zweiten Leitung 35 verbunden ist, die an die vorhin erwähnte Druckkammer 14 angeschlossen ist. Weiterhin ist Fig. 1 zu entnehmen, dass die vorhin erwähnte Druckkammer 14 über eine absperrbare Verbindungsleitung 24 mit einer Simulatorkammer 25 in Verbindung steht, die von einem Simulatorkolben 26 begrenzt wird. Dabei wirkt der Simulatorkolben 26 mit einer Simulatorfeder 27 sowie einer der Simulatorfeder 27 parallel geschalteten Elastomerfeder 28 zusammen. Dabei bilden die Simulatorkammer 25, der Simulatorkolben 26, die Simulatorfeder 27 sowie die Elastomerfeder 28 einen Pedalwegsimulator, der dem Fahrzeugführer bei der Betätigung des Bremssystems das gewohnte Pedalgefühl vermittelt, das einer üblichen Bremspedalcharakteristik entspricht. Dies bedeutet, dass bei geringem Bremspedalweg der Widerstand langsam ansteigt und bei größerem Bremspedalweg überproportional zunimmt. Zur Dämpfung der Bewegung des Simulatorkolbens 26 können nicht dargestellte, beispielsweise pneumatische Dämpfungsmittel vorgesehen sein. Die hydraulische Verbindungsleitung 24 zwischen der Simulatorkammer 25 und der Druckkammer 14 bzw. der Kammer 38 des zweiten Druckmittelvorratsbehälters wird durch eine Bewegung des dritten Kolbens 13 in Betätigungsrichtung des Hauptbremszylinders 3 abgesperrt, wodurch der Pedalwegsimulator wirkungsmäßig abgeschaltet wird. Der erste Kolben 11, die Feder 15, die hydraulische Kammer 14, die hydraulische Verbindung 24, die Simulatorkammer 25, der Simulatorkolben 26, die Simulatorfedern 18 und 27, sowie die nicht dargestellten Dämpfungsmittel bilden zusammen die Simulationseinrichtung, die zusammen mit einer unter Atmosphärendruck stehenden Kammer 38 des zweiten Druckmittelvorratsbehälters einem ersten Bremskraftverstärkerdruckmittelkreis zugeordnet ist, der von den Radbremskreisen I, II vollständig getrennt ist.

Die vorhin erwähnte elektrohydraulische Druckbereitstellungseinrichtung 2 besteht im Wesentlichen aus einer hydraulischen Zylinder-Kolben-Anordnung 29 sowie einem elektromechanischen Aktuator 30, der beispielsweise durch einen Elektromotor mit einem Untersetzungsgetriebe gebildet wird, der eine translatorische Bewegung eines hydraulischen Kolbens 31 gewährleistet, so dass in einem Druckraum 36 der hydraulischen Zylinder-Kolben-Anordnung 29 ein hydraulischer Druck aufgebaut wird. Der elektromechanische Aktuator 30 wird von einem elektrischen Energiespeicher mit Energie versorgt, der mit dem Bezugszeichen 49 versehen ist. Die Bewegung des Kolbens 31 wird mittels eines Wegsensors erfasst, der mit dem Bezugszeichen 32 versehen ist. Der Druckraum 36 ist einerseits an den Zwischenraum 21 angeschlossen und andererseits mittels eines stromlos offenen (SO-) 2/2-Wegeventils 37 mit einer unter Atmosphärendruck stehenden Kammer 39 eines zweiten Druckmittelvorratsbehälters verbindbar. Dabei sind die Druckbereitstellungseinrichtung 2, der Zwischenraum 21 sowie die Kammer 39 des zweiten Druckmittelvorratsbehälters einem zweiten Bremskraftverstärkerdruckmittelkreis zugeordnet, der sowohl vom ersten Bremskraftverstärkerdruckmittelkreis als auch von den Radbremskreisen I, II vollständig getrennt ist. Ein Drucksensor 40 dient dem Erfassen des von der Druckbereitstellungseinrichtung 2 bereitgestellten bzw. des im Zwischenraum 21 herrschenden Druckes.

Das vorhin erwähnte Sperrventil 33 ermöglicht ein Absperren der Kammer 17 gegenüber der Druckkammer 14, wodurch eine Bewegung des dritten Kolbens 13 in Betätigungsrichtung verhindert wird. Die Kammer 17, die erste Druckmittelleitung 34, das Sperrventil 33, die zweite Druckmittelleitung 35, die Druckkammer 14, die Verbindungsleitung 24, die Simulatorkammer 25 sowie der zweite Druckmittelvorratsbehälter 38 bilden einen zweiten Bremskraftverstärkerdruckmittelkreis, der vom ersten Bremskraftverstärkerdruckmittelkreis sowie von den beiden Radbremskreisen I, II vollständig getrennt ist. Den genannten Elementen ist eine eigene elektronische Steuereinheit 42 zugeordnet, die mit der vorhin erwähnten elektronischen Steuer- und Regeleinheit 41 zusammenwirkt und die der Erfassung von Sensordaten, der Verarbeitung dieser Daten, dem Austausch von Daten mit anderen Steuereinheiten, der Ansteuerung des elektromechanischen Aktuators 30, sowie der Bremsleuchten des Fahrzeugs dient.

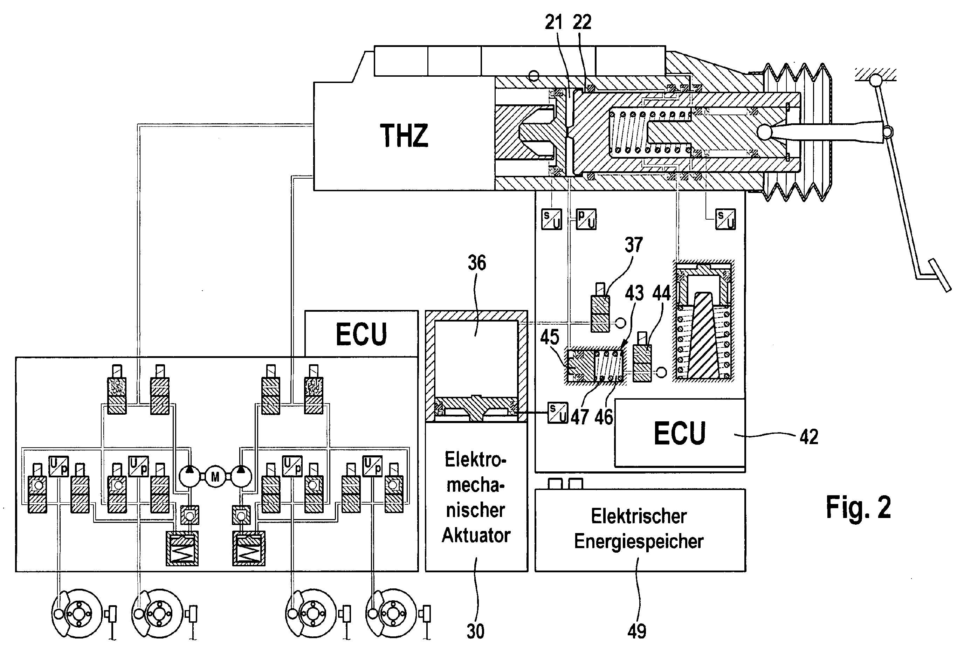

Der Aufbau der in Fig. 2 gezeigten Ausführung des erfindungsgemäßen Bremssystems entspricht weitgehend dem Bremssystem, das im Zusammenhang mit Fig. 1 ausführlich erläutert wurde. Der hydraulische Druckraum 36 bzw. der Zwischenraum 21 ist an ein hydraulisches Volumenaufnahmeelement 43 angeschlossen, dessen Kolben 45 einen Raum 46 begrenzt, der eine Druckfeder 47 aufnimmt. Der Raum 46 steht unter Zwischenschaltung eines stromlos offenen (SO-) 2/2-Wegeventils 44 mit dem dritten Druckmittelvorratsbehälter 39 in Verbindung.

Im nachfolgenden Text wird die Funktionsweise des Bremssystems im Zusammenhang mit Fig. 1 näher erläutert.

Ein erster Betriebsmodus entspricht einer rein elektrischen, der sog. "Brake-by-wire"-Betriebsart, bei der sämtliche Komponenten des Bremssystems intakt sind und einwandfrei arbeiten. In diesem Modus werden zum Aufbau eines hydraulischen Druckes im Zwischenraum 21 das 2/2-Wegeventil 37 und der elektromechanische Aktuator 30 angesteuert, so dass der von der Druckbereitstellungseinrichtung 2 bereit gestellte bzw. der in ihrer Zylinder-Kolben-Anordnung 29 erzeugte Druck dem Zwischenraum 21 zugeführt wird. Durch die Druckwirkung wird der dritte Kolben 13 am Anschlag 22 gehalten und der Druckübersetzungskolben 16 nach links verschoben, wodurch der Hauptbremszylinder 3 betätigt wird. Zum Zweck des Druckhaltens wird der Kolben 31 der Kolben-Zylinder-Anordnung 29 in der eingesteuerten Position fest gehalten. Das in der Verbindung zwischen dem Zwischenraum 21 und dem zweiten Druckmittelvorratsbehälter 38 eingefügte, stromlos offene 2/2-Wegeventil 37 wird sowohl beim Druckaufbau als auch beim Druckhalten in seiner geschlossenen Schaltstellung festgehalten.

Für einen Druckabbau wird der Kolben 31 der Zylinder-Kolben-Anordnung 29 zurück gefahren. Dabei strömt Druckmittel aus dem Zwischenraum 21 zurück in den Druckraum 36. Zum vollständigen Abbau des Druckes auf Atmosphärendruckniveau wird schließlich das vorhin genannte 2/2-Wegeventil 37 geöffnet, wodurch eine hydraulische Verbindung zur zweiten Kammer 39 des zweiten Druckmittelvorratsbehälters hergestellt wird. Um einen Unterdruck im Zwischenraum 21 bzw. im Druckraum 36 zu vermeiden kann das 2/2-Wegeventil 37 so ausgestaltet sein, dass es im bestromten Zustand einen Druckmittelvolumenstrom vom dritten Druckmittelvorratsbehälter 39 in die Druckräume 21, 26 erlaubt.

Der Vorgang der Ansteuerung des elektromechanischen Aktuators 30 wird von der elektronischen Steuereinheit 42 derart durchgeführt, dass der Druck im Zwischenraum 21 einem Solldruckwert angenähert wird. Dieser Solldruckwert ergibt sich einerseits aus einer erfassten Betätigungskomponente des Bremspedals 9 und andererseits aus einer Fremdbetätigungskomponente. Die Betätigungskomponente des Bremspedals 9 wird aus dem Betätigungsweg des Bremspedals 9 bzw. des ersten Kolbens 11 und aus dem hydraulischen Druck in der Druckkammer 14 ermittelt, der mittels eines Drucksensors 48 erfasst wird und der der Betätigungskraft des Bremspedals 9 proportional ist.

In einem zweiten Betriebsmodus, der durch eine Störung der Elektronik bzw. durch das Fehlen eines von der hydraulischen Druckbereitstellungseinrichtung 2 erzeugten Druckes charakterisiert ist und einer Rückfallebene entspricht, ist kein elektronisch gesteuerter Druckaufbau im Zwischenraum 21 möglich. In diesem Betriebsmodus kann das Bremssystem rein mechanisch betätigt werden. Der dritte Kolben 13 bewegt sich unter dem Einfluss einer Bremspedalbetätigung von seinem Anschlag 22 weg und verschiebt den zweiten Kolben 12 durch mechanischen Kontakt. Die Betätigung des Hauptbremszylinders 3 erfolgt ausschließlich mit Muskelkraft des Fahrzeugführers.

In einem dritten Betriebsmodus der Bremsanlage der Fig. 1, der einer Rekuperationsbremsung entspricht, muss der im Zwischenraum 21 eingesteuerte Druck trotz einer Betätigung des Bremspedals 9 bis auf Null reduziert werden können, um eine möglichst vollständige Rekuperation der kinetischen Energie des Fahrzeugs zu erreichen. Zu diesem Zweck wird das Sperrventil 33 geschlossen, so dass die Kammer 17 abgesperrt wird. Durch das Absperren der Kammer 17 wird eine Bewegung des dritten Kolbens 13 in der Betätigungsrichtung verhindert. Ein Verzögerungsbedarf, der durch Rekuperation nicht vollständig abgedeckt werden kann, wird durch eine der Differenz entsprechende Teilbremsung abgedeckt. Alternativ zur Verwendung des Sperrventils 33 wird im dritten Betriebsmodus der beispielsgemäßen Bremsanlage der Fig. 2, d.h. während einer Rekuperationsbremsung mit Hilfe der Druckbereitstellungseinrichtung 2 im Zwischenraum 21 ein Druck eingesteuert, der sowohl größer als der größte der momentan benötigten Radbremsdrücke als auch größer als der zum Zurückhalten des Kolbens 13 benötigte Druck gewählt wird. Mit Hilfe der nachgeschalteten ABS- bzw. ESP- Radbremsdruckmodulationseinheit werden aus diesem Druck die achs- oder radindividuellen Bremsdrücke erzeugt.

Durch die vorliegende Erfindung wird eine einfach aufgebaute Bremsanlage erreicht, bei der in einer "Brake-by-wire"-Betriebsart, sowie bei Rekuperationsbremsungen die Bremspedalcharakteristik nicht vom Betätigungszustand der restlichen Bremsanlage abhängt, wodurch das Pedalgefühl bei einer Fahrerbremsung weder durch das gleichzeitige Vorliegen einer Fremdbremsung noch durch andere Regelungsaktivitäten des Bremssystems wie Antiblockierregelung, Traktionskontrolle oder Fahrstabilitätsregelung gestört werden kann.

Die erfindungsgemäße Bremsanlage hat weiterhin den Vorteil, dass keine aufwändigen hydraulischen Bauelemente wie Pumpe, Hydrospeicher und Schieberventil benötigt werden. Als einzige hydraulische Komponenten werden im Vergleich zu den gerade genannten Komponenten einfache und kostengünstige elastomergedichtete Kolben und Zylinder, sowie die in der Bremsentechnik millionenfach bewährten 2/2-Elektromagnetventile eingesetzt. Die Erfindung ermöglicht den Einsatz eines mechatronischen Aktuators, der sowohl aus einem elektrischen Stellenergiespeicher als auch direkt aus einem elektrischen Fahrzeugbordnetz gespeist werden kann.

## Patentansprüche

1. Bremsanlage für Kraftfahrzeuge mit
• einem Hauptzylinder (3), an den Radbremskreise (I,II) angeschlossen sind,
• einem ersten Kolben (11), der über eine Betätigungskräfte übertragende Druckstange (10) mit einem Bremspedal (9) gekoppelt ist,
• einem zweiten Kolben (12), über den der Hauptzylinder (3) betätigt wird,
• einem dritten Kolben (13), der vom ersten Kolben (11) betätigbar ist, und der in eine kraftübertragende Verbindung mit dem zweiten Kolben (12) bringbar ist,
• mit einer Simulationseinrichtung mit mindestens einem elastischen Element (27,28), die in der Betriebsart "brake-by-wire" dem Fahrzeugführer ein angenehmes Pedalgefühl vermittelt,
• mit einem mit hydraulischem Druck beaufschlagbaren Zwischenraum (21) zwischen dem zweiten (12) und dritten Kolben (13), wobei eine Druckbeaufschlagung des Zwischenraums (21) den zweiten und den dritten Kolben (12, 13) in entgegen gesetzter Richtung belastet,
• mit einer Druckbereitstellungseinrichtung (2), die den Druck im Zwischenraum (21) steuert,
• mit einem unter Atmosphärendruck stehenden Druckmittelvorratsbehälter (39), der mit dem Zwischenraum (21) hydraulisch verbindbar ist,
sowie
• mit Mitteln (42) zur elektrischen Regelung des Drucks im Zwischenraum (21),
wobei das zur elektrischen Regelung des im Zwischenraum (21) eingesteuerten Druckes benötigte Druckmittel in der Druckbereitstellungseinrichtung (2) unter Atmosphärendruck bereitgehalten und bei Bedarf unter einen höheren Druck gesetzt wird, **dadurch gekennzeichnet, dass** an die Druckbereitstellungseinrichtung (2) ein hydraulisches Volumenaufnahmeelement (43) angeschlossen ist.

2. Bremssystem nach Anspruch 1 **dadurch gekennzeichnet, dass** die Druckbereitstellungseinrichtung (2) durch eine Zylinder-Kolben-Anordnung (29) gebildet wird, deren Kolben (31) durch einen elektromechanischen Aktuator (30) betätigbar ist.

3. Bremssystem nach Anspruch 2 **dadurch gekennzeichnet, dass** ein elektrischer Energiespeicher (49) vorgesehen ist, der den elektromechanischen Aktuator (30) mit Energie versorgt, solange dieser nicht direkt aus einem elektrischen Fahrzeugbordnetz gespeist wird.

4. Bremssystem nach Anspruch 3, **dadurch gekennzeichnet, dass** der elektrische Energiespeicher (49) aus dem elektrischen Fahrzeugbordnetz nachgeladen und sein Ladezustand und seine Funktionsfähigkeit von einer dem Bremssystem zugeordneten Elektronikeinheit (41, 42) überwacht wird.

5. Bremssystem nach einem der Ansprüche 1 bis 4 **dadurch gekennzeichnet, dass** im dritten Kolben (13) eine hydraulische Druckkammer (14) ausgebildet ist.

6. Bremssystem nach Anspruch 5 **dadurch gekennzeichnet, dass** die hydraulische Druckkammer (14) in absperrbarer Verbindung mit einer hydraulischen Simulatorkammer (25) steht, die von einem hydraulischen Simulatorkolben (26) begrenzt wird, der mit den den Pedalwegsimulator bildenden Elementen (27, 28) in kraftübertragender Verbindung steht.

7. Bremssystem nach Anspruch 6 **dadurch gekennzeichnet, dass** die Verbindung zwischen der hydraulischen Druckkammer (14) mit der hydraulischen Simulatorkammer (25) durch eine Bewegung des dritten Kolbens (13) absperrbar ist.

8. Bremssystem nach Anspruch 6 oder 7 **dadurch gekennzeichnet, dass** die Druckkammer (14), die Simulatorkammer (25) und eine erste Kammer (38) eines Druckmittelvorratsbehälters einem ersten Bremskraftverstärkerdruckmittelkreis und die Druckbereitstellungseinrichtung (2), der Zwischenraum (21) und eine zweite Kammer (39) des Druckmittelvorratsbehälters einem zweiten Bremskraftverstärkerdruckmittelkreis zugeordnet sind und dass während des Betriebs des Bremssystems zwischen dem ersten und zweiten Bremskraftverstärkerdruckmittelkreis, sowie den Radbremskreisen (I,II) kein Druckmittelaustausch stattfindet.

9. Bremssystem nach einem der Ansprüche 1 bis 8 **dadurch gekennzeichnet, dass** die Druckbereitstellungseinrichtung (2) unter Zwischenschaltung eines elektrisch schaltbaren 2/2-Wegeventils (37) an den Druckmittelvorratsbehälter (39) angeschlossen ist.

10. Bremssystem nach einem der Ansprüche 1 bis 9 **dadurch gekennzeichnet, dass** die Volumenaufnahmefunktion des hydraulischen Volumenaufnahmeelements mit Hilfe eines Elektromagnetventils (44) zu- und abschaltbar ist.

11. Bremssystem nach einem der Ansprüche 1 bis 10 **dadurch gekennzeichnet, dass** das Volumenaufnahmeelement (43) einen Kolben (45) umfasst, welcher einen Raum (46) begrenzt, der eine Druckfeder (47) aufnimmt.

12. Bremssystem nach einem der Ansprüche 1 bis 11 **dadurch gekennzeichnet, dass** dieses Mittel umfasst, mit welchen ein Niederdrücken des Bremspedals (9) erfasst, elektronisch verarbeitet und in eine Aktivierung der Druckbereitstellungseinrichtung (2) umgesetzt wird.

13. Bremssystem nach Anspruch 12 **dadurch gekennzeichnet, dass** das Niederdrücken des Bremspedals über ein Mittel erfasst wird, welches eine den Pedalweg repräsentierende Messgröße und/oder eine die Pedalkraft repräsentierende Messgröße erfasst.

14. Bremssystem nach Anspruch 13 **dadurch gekennzeichnet, dass** die den Pedalweg repräsentierende Größe der Weg des ersten Kolbens (11) ist und durch einen Kolbenwegsensor (19) erfasst wird.

15. Bremssystem nach Anspruch 13 **dadurch gekennzeichnet, dass** die den Pedalweg repräsentierende Größe der Drehwinkel des Bremspedals (9) ist und durch einen Drehwinkelsensor erfasst wird.

16. Bremssystem nach Anspruch 13 **dadurch gekennzeichnet, dass** die die Pedalkraft repräsentierende Größe die Kraft in der Druckstange (10) ist, welche durch einen in die Druckstange (10) eingefügten Kraftsensor erfasst wird.

17. Bremssystem nach Anspruch 13 wenn rückbezogen auf Anspruch 5 **dadurch gekennzeichnet, dass** die die Pedalkraft repräsentierende Größe der Druck in der Druckkammer (14) ist, welcher durch einen Drucksensor erfasst wird.

18. Bremssystem nach einem der Ansprüche 1 bis 17 **dadurch gekennzeichnet, dass** Mittel (23) zur Erfassung des vom zweiten Kolben (12) zurückgelegten Weges vorgesehen sind.

19. Bremssystem nach einem der Ansprüche 1 bis 18 **dadurch gekennzeichnet, dass** zwischen dem zweiten (12) und dem dritten Kolben (13) ein Druckübersetzungskolben (16) vorgesehen ist.

20. Bremssystem nach Anspruch 19 **dadurch gekennzeichnet, dass** Mittel (23) zur Erfassung des vom Druckübersetzungskolben (16) zurückgelegten Weges vorgesehen sind.

## Claims

1. Braking system for motor vehicles, having
• a master cylinder (3) to which wheel brake circuits (I, II) are connected,
• a first piston (11) which is coupled to a brake pedal (9) via a pressure rod (10) which transmits actuating forces,
• a second piston (12) by means of which the master cylinder (3) is actuated,
• a third piston (13) which can be actuated by the first piston (11) and which can be connected in a force transmitting fashion to the second piston (12),
• having a simulation device with at least one elastic element (27, 28) which, in the brake-by-wire operating mode, gives the driver of the vehicle a pleasant pedal sensation,
• having an intermediate space (21), to which hydraulic pressure can be applied, between the second piston (12) and third piston (13), wherein an application of pressure to the intermediate space (21) loads the second and third pistons (12, 13) in opposite directions,
• having a pressure generating device (2) which controls the pressure in the intermediate space (21),
• having a pressure medium reservoir vessel (39) which is under atmospheric pressure and which can be connected hydraulically to the intermediate space (21),
and
• having means (42) for electrically controlling the pressure in the intermediate space (21),
wherein the pressure medium which is required to electrically control the pressure applied to the intermediate space (21) is kept available under atmospheric pressure, and if necessary placed under a higher pressure, in the pressure generating device (2), **characterized in that** a hydraulic volume holding element (43) is connected to the pressure generating device (2).

2. Braking system according to Claim 1, **characterized in that** the pressure generating device (2) is formed by a cylinder/piston arrangement (29) whose piston (31) can be actuated by an electromechanical actuator (30).

3. Braking system according to Claim 2, **characterized in that** an electric energy store (49) is provided which supplies the electromechanical actuator (30) with energy as long as said actuator (30) is not fed directly from an on-board vehicle electric system.

4. Braking system according to Claim 3, **characterized in that** the electric energy store (49) is recharged from the on-board vehicle electric system and its charge state and its functional capability are monitored by an electronic unit (41, 42) which is assigned to the braking system.

5. Braking system according to one of Claims 1 to 4, **characterized in that** a hydraulic pressure chamber (14) is formed in the third piston (13).

6. Braking system according to Claim 5, **characterized in that** the hydraulic pressure chamber (14) is disconnectably connected to a hydraulic simulator chamber (25) which is bounded by a hydraulic simulator piston (26) which is connected in a force transmitting fashion to the elements (27, 28) which form the pedal travel simulator.

7. Braking system according to Claim 6, **characterized in that** the connection between the hydraulic pressure chamber (14) and the hydraulic simulator chamber (25) can be disconnected by a movement of the third piston (13).

8. Braking system according to Claim 6 or 7, **characterized in that** the pressure chamber (14), the simulator chamber (25) and a first chamber (38) of a pressure medium reservoir vessel are assigned to a first brake booster pressure medium circuit, and the pressure generating device (2), the intermediate space (21) and a second chamber (39) of the pressure medium reservoir vessel are assigned to a second brake booster pressure medium circuit, and **in that**, while the braking system is operating, no exchange of pressure medium takes place between the first and second brake booster pressure medium circuits or the wheel brake circuits (I, II).

9. Braking system according to one of Claims 1 to 8, **characterized in that** the pressure generating device (2) is connected to the pressure medium reservoir vessel (39) with the intermediate connection of an electrically switchable 2/2 way valve (37).

10. Braking system according to one of Claims 1 to 9, **characterized in that** the volume holding function of the hydraulic volume holding element can be connected and disconnected using a solenoid valve (44).

11. Braking system according to one of Claims 1 to 10, **characterized in that** the volume holding element (43) comprises a piston (45) which bounds a space (46) which accommodates a pressure spring (47).

12. Braking system according to one of Claims 1 to 11, **characterized in that** it comprises means with which depressing of the brake pedal (9) is sensed, processed electronically and converted into activation of the pressure generating device (2).

13. Braking system according to Claim 12, **characterized in that** the depressing of the brake pedal is sensed by means which sense the measurement variable which represents the pedal travel and/or the measurement variable which represents the pedal force.

14. Braking system according to Claim 13, **characterized in that** the variable which represents the pedal travel is the travel of the first piston (11) and is sensed by a piston travel sensor (19).

15. Braking system according to Claim 13, **characterized in that** the variable which represents the pedal travel is the rotational angle of the brake pedal (9) and is sensed by a rotational angle sensor.

16. Braking system according to Claim 13, **characterized in that** the variable which represents the pedal force is the force in the pressure rod (10) which is sensed by a force sensor which is inserted into the pressure rod (10).

17. Braking system according to Claim 13 when referring back to Claim 5, **characterized in that** the variable which represents the pedal force is the pressure in the pressure chamber (14) which is sensed by a pressure sensor.

18. Braking system according to one of Claims 1 to 17, **characterized in that** means (23) are provided for sensing the travel executed by the second piston (12).

19. Braking system according to one of Claims 1 to 18, **characterized in that** a pressure transmitting piston (16) is provided between the second piston (12) and the third piston (13).

20. Braking system according to Claim 19, **characterized in that** means (23) are provided for sensing the travel executed by the pressure transmitting piston (16).

## Revendications

1. Système de freinage pour véhicules automobiles doté de :
- un cylindre principal (3) raccordé aux circuits de frein de roue (I, II) ;
- un premier piston (11) couplé à une pédale de frein (9) par le biais d'une barre de pression (10) transmettant les forces actionnement ;
- un deuxième piston (12) actionné par le biais du cylindre principal (3) ;
- un troisième piston (13) pouvant être actionné par le premier piston (11) et pouvant être placé dans une liaison de transmission de force avec le deuxième piston (12) ;
- un dispositif de simulation doté d'au moins un élément élastique (27, 28) transmettant au conducteur du véhicule une sensation de pédale agréable dans le mode de fonctionnement « frein par câble » (« brake-by-wire » en anglais) ;
- un espace intermédiaire (21) placé entre le deuxième piston (12) et le troisième piston (13) et pouvant être alimenté en pression hydraulique, une alimentation en pression de l'espace intermédiaire (21) sollicitant les deuxième et troisième pistons (12, 13) dans la direction opposée ;
- un dispositif de mise à disposition de pression (2) commandant la pression régnant dans l'espace intermédiaire (21) ;
- un réservoir de moyen de pression (39) placé sous pression atmosphérique pouvant être relié sur le plan hydraulique à l'espace intermédiaire (21) ; ainsi que
- des moyens (42) de régulation électrique de la pression dans l'espace intermédiaire (21) ;
le moyen de pression nécessaire à la régulation électrique de la pression commandée au sein de l'espace intermédiaire (21) étant mis à disposition sous pression atmosphérique dans le dispositif de mise à disposition de pression (2) et une pression supérieure étant utilisée si nécessaire ;
**caractérisé en ce qu'**un élément de réception de volume hydraulique (43) est raccordé au dispositif de mise à disposition de pression (2).

2. Système de freinage selon la revendication 1, **caractérisé en ce que** le dispositif de mise à disposition de pression (2) peut être actionné par le biais d'un agencement piston-cylindre (29) dont le piston (31) peut être actionné par le biais d'un actionneur électromécanique (30).

3. Système de freinage selon la revendication 2, **caractérisé en ce qu'**un accumulateur d'énergie électrique (49) est prévu lequel alimente l'actionneur électromécanique (30) en énergie tant que celui-ci n'est pas directement alimenté par un réseau électrique de bord de véhicule.

4. Système de freinage selon la revendication 3, **caractérisé en ce que** l'accumulateur d'énergie électrique (49) est rechargé à partir du réseau électrique de bord de véhicule et que son état de charge et sa capacité de fonctionnement sont surveillés par une unité électronique (41, 42) associée au système de freinage.

5. Système de freinage selon l'une quelconque des revendications 1 à 4, **caractérisé en ce qu'**une chambre de pression hydraulique (14) est réalisée dans le troisième piston (13).

6. Système de freinage selon la revendication 5, **caractérisé en ce que** la chambre de pression hydraulique (14) peut être reliée de façon à pouvoir être bloquée avec une chambre de simulateur hydraulique (25) délimitée par un piston de simulateur hydraulique (26) placé en liaison de transmission de force avec les éléments (27, 28) formant le simulateur de course de pédale.

7. Système de freinage selon la revendication 6, **caractérisé en ce que** la liaison prévue entre la chambre de pression hydraulique (14) et la chambre de simulateur hydraulique (25) peut être bloquée par déplacement du troisième piston (13).

8. Système de freinage selon la revendication 6 ou 7, **caractérisé en ce que** la chambre de pression (14), la chambre de simulateur (25) et une première chambre (38) d'un réservoir de moyen de pression sont associées à un premier circuit de moyen de pression à amplification de la force de freinage et que le dispositif de mise à disposition de pression (2), l'espace intermédiaire (21) et une deuxième chambre (39) du réservoir de moyen de pression sont associés à un deuxième circuit de moyen de pression à amplification de la force de freinage et qu'aucun échange de moyen de pression ne se produit entre le premier et le deuxième circuit de moyen de pression à amplification de la force de freinage ainsi qu'entre les circuits de frein de roue (I, II) lorsque le système de freinage fonctionne.

9. Système de freinage selon l'une quelconque des revendications 1 à 8, **caractérisé en ce que** le dispositif de mise à disposition de pression (2) est raccordé au réservoir de moyen de pression (39) par interconnexion d'une soupape à 2/2 voies (37) pouvant être commutée électriquement.

10. Système de freinage selon l'une quelconque des revendications 1 à 9, **caractérisé en ce que** la fonction de réception de volume des éléments de réception de volume hydraulique peut être connectée et déconnectée à l'aide d'une soupape électromagnétique (44).

11. Système de freinage selon l'une quelconque des revendications 1 à 10, **caractérisé en ce que** l'élément de réception de volume (43) comprend un piston (45) délimitant une chambre (46) accueillant un ressort de pression (47).

12. Système de freinage selon l'une quelconque des revendications 1 à 11, **caractérisé en ce qu'**il comprend des moyens de détection d'abaissement de la pédale de frein (9) traitant électroniquement cette information et la convertissant en une activation du dispositif de mise à disposition de pression (2).

13. Système de freinage selon la revendication 12, **caractérisé en ce que** l'abaissement de la pédale de frein est détecté à l'aide d'un moyen détectant une grandeur de mesure représentant la course de pédale et/ou d'une grandeur de mesure représentant la force de pédale.

14. Système de freinage selon la revendication 13, **caractérisé en ce que** la grandeur représentant la course de pédale est la course du premier piston (11) et est détectée par le biais d'un capteur de course de piston (19).

15. Système de freinage selon la revendication 13, **caractérisé en ce que** la grandeur représentant la course de pédale est l'angle de rotation de la pédale de frein (9) et est détectée par le biais d'un capteur d'angle de rotation.

16. Système de freinage selon la revendication 13, **caractérisé en ce que** la grandeur représentant la force de pédale est la force de la barre de pression (10) détectée par le biais d'un capteur de force inséré dans la barre de pression (10).

17. Système de freinage selon la revendication 13, en référence à la revendication 5, **caractérisé en ce que** la grandeur représentant la force de pédale est la pression régnant dans la chambre de pression (14) détectée par le biais d'un capteur de pression.

18. Système de freinage selon l'une quelconque des revendications 1 à 17, **caractérisé en ce que** des moyens (23) de détection de rappel de course du deuxième piston (12) sont prévus.

19. Système de freinage selon l'une quelconque des revendications 1 à 18, **caractérisé en ce qu'**un piston démultiplicateur (16) est prévu entre le deuxième piston (12) et le troisième piston (13).

20. Système de freinage selon la revendication 19, **caractérisé en ce que** des moyens (23) de détection de rappel de course du piston démultiplicateur (16) sont prévus.
